# EUROPÄISCHE PATENTANMELDUNG

(11) **EP 2 735 532 A1**
(43) Veröffentlichungstag der Anmeldung: **28.05.2014**
(21) Anmeldenummer: 13194531.3
(22) Anmeldetag: 26.11.2013
(51) Int. Cl.: B65G 57/00, B65G 61/00

(54) **Vorrichtung zum Palettieren von Verpackungen**

(30) Priorität: 26.11.2012 DE 102012111449
(71) Anmelder: Pester Pac Automation GmbH, 87787 Wolfertschwenden (DE)
(72) Erfinder: Haug, Hans, 87730 Bad Grönenbach (DE)
(74) Vertreter: Hutzelmann, Gerhard

(57) **Zusammenfassung**

Vorrichtung zum Palettieren von Verpackungen (20), insbesondere zum Palettieren von aufgerichteten Faltschachteln (2), wobei ein oder mehrere in mehreren Richtungen bewegliche Greifer (7) vorgesehen sind, welche die fertigen Verpackungen (20) zu greifen vermögen und ausgerichtet auf wenigstens eine, vorzugsweise wenigstens zwei parallel neben einander angeordneten Paletten (9, 10) oder dergleichen zu stapeln vermögen.

## Beschreibung

Die Erfindung bezieht sich auf eine Vorrichtung zum Palettieren von Verpackungen, insbesondere von aufgerichteten Faltschachteln.

Derartige Vorrichtungen sind in vielen Ausgestaltungen bekannt. Dabei sind jedoch meist längere Transportwege notwendig. Der Platzbedarf ist groß.

Der Erfindung liegt die Aufgabe zugrunde eine Vorrichtung der genannten Art zu schaffen, mit der die Palettierung von Gegenständen sicher aber auf engstem Raum auszuführen ist.

Diese Aufgabe wird erfindungsgemäß dadurch gelöst, dass ein oder mehrere in mehreren Richtungen bewegliche Greifer vorgesehen sind, welche die fertigen Verpackungen zu greifen vermögen und ausgerichtet auf wenigstens eine, vorzugsweise wenigstens zwei parallel neben einander angeordneten Paletten oder dergleichen zu stapeln vermögen.

Hierdurch kann die Palettierung auf sehr engem Raum vorgenommen werden.

Dabei hat es sich erfindungsgemäß als sehr vorteilhaft erwiesen, wenn die Greifer mit einem Saugheber ausgerüstet sind, welcger die Verpackungen anzuheben vermag.

Damit lassen sich die Verpackungen schonend ergreifen.

Sehr vorteilhaft ist es erfindungsgemäß auch, wenn die Greifer als Roboterarme ausgebildet sind.

Dadurch ergeben sich vielfältige Manipulationsmöglichkeiten der Verpackungen.

Eine weitere sehr vorteilhafte Fortbildung der Erfindung liegt auch vor, wenn eine Hub- und/oder Drehstation zur Ausrichtung, Drehung und Übergabe der fertigen Verpackungen vorgesehen ist, wobei diese Station durch einen Greifer bzw. Roboterarm realisiert sein kann.

Hiermit lassen sich die Verpackungen derart Ausrichten, daß diese optimal auf der Palette gestapelt werden können.

Ebenfalls sehr vorteilhaft ist es gemäß einer weiteren Ausgestaltung der Erfindung, wenn die Hub- und/oder Drehstation mit der Palettierstation zusammengefasst ist.

Hierdurch wird zusätzlich Platz eingespart.

Als sehr vorteilhaft hat es sich auch ergeben, wenn gemäß einer weiteren Ausgestaltung der Erfindung die Greifer seitlich, oberhalb oder unterhalb der Stationen angeordnet sind.

Damit können die Greifer platzsparend angeordnet werden und können trotzdem den gesamten vorgesehenen Bereich abdecken.

Äußerst vorteilhaft ist es erfindungsgemäß auch, wenn eine Sicherheitseinrichtung vorgesehen ist, die ein versehentliches Hineingreifen oder Hineingehen in den Arbeitsbereich der Vorrichtung verhindert bzw. die den Arbeitsbereich beim Austausch von Vorratsstapeln und/oder Paletten oder dergleichen in der Ablagestation beschränkt.

Hierdurch wird eine sichere Bedienung der Vorrichtung ermöglicht.

Äußerst vorteilhaft ist es auch, wenn für jede Palette ein durch Seitenwände abgegrenzter Raum geschaffen wird, in dem diese von den Greifern bzw. Robotern beladen wird und daß jeder der beiden Räume für einen Bediener zugänglich ist.

Damit wird ein Sicherheitsbereich geschaffen um einen gefahrlosen Palettentausch zu ermöglichen. Ein versehentliches Hineintreten in den jeweils anderen Palettenbereich, der dann gerade in Benutzung ist, ist ausgeschlossen.

Dabei ist es gemäß einer Weiterbildung der Erfindung äußerst vorteilhaft, wenn jede Palette durch Steuerung der Greifarme bzw. Roboter von der Palettierung ausgeschlossen werden kann.

Damit wird eine Palette zum Austausch zugänglich. So kann eine gefüllte Palette gegen eine noch leere ersetzt werden, ohne daß der Bediener durch die Greifarme bzw. Roboter verletzt werden könnte.

Desweiteren hat es sich als sehr vorteilhaft erwiesen, wenn eine Abdeckvorrichtung zur Abgrenzung der gerade nicht genutzten Palette vorgesehen ist.

Hierdurch wird ein abgeschlossener Raum geschaffen. Das Übergreifen des Bedieners in den jeweils anderen Raum wird ebenso verhindert, wie das versehentliche Eingreifen der Greifer in den abgeschlossenen Raum.

Sehr vorteilhaft ist es gemäß einer weiteren Ausgestaltung der Erfindung auch, wenn eine Sicherheitseinrichtung gegen Hineingreifen in den Bereich der gerade genutzten Palette vorgesehen ist.

Wird in diesen Bereich hineingegriffen oder gar hineingetreten, so wird der Betrieb des Palettierers sofort unterbrochen. Eine Verletzung des Bedieners ist ausgeschlossen. Die Sicherheitseinrichtung kann beispielsweise über Schaltkontakte, Lichtschranken oder dergleichen realisiert sein.

Ebenso hat es sich als sehr vorteilhaft erwiesen, wenn eine Sicherheitseinrichtung vorgesehen ist, welche die gerade nicht genutzte Palette von der Nutzung ausschließt, wenn ein Bediener auf diese zugreift.

Wird nun beispielsweise eine Zugangstüre zu einer Palette geöffnet, wird diese Palette vom Betrieb ausgeschlossen und gegebenenfalls eine Abdeckvorrichtung über die Palette geschoben. Es wird damit ein Sicherheitsraum geschaffen.

In der Zeichnung ist die Erfindung anhand zweier Ausführungsbeispiels veranschaulicht. Dabei zeigen:

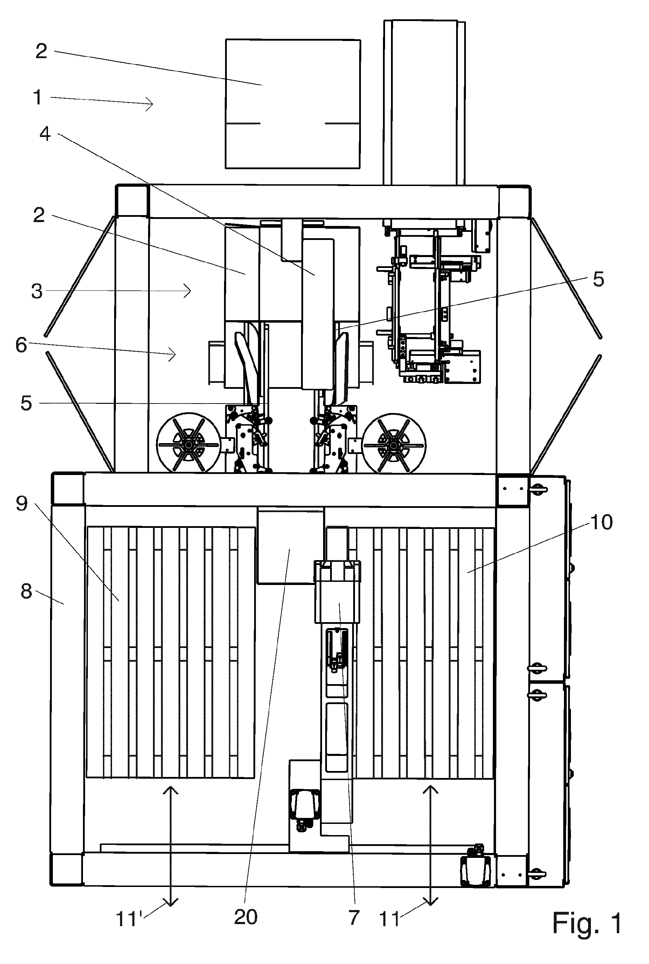

- Fig.1: eine Draufsicht auf eine Vorrichtung, die an einem Faltschachtelaufrichter angebaut ist,

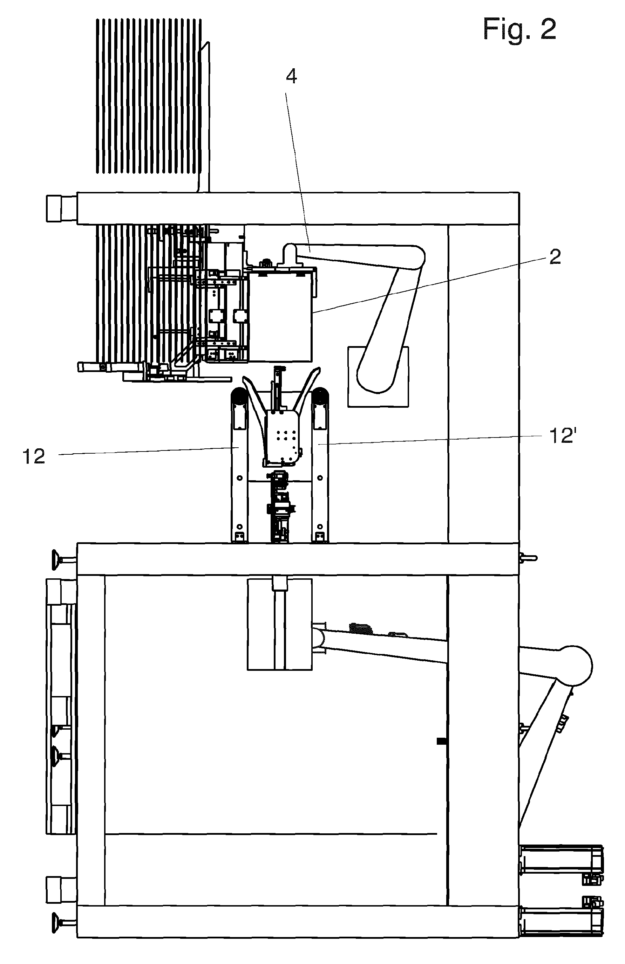

- Fig.2: eine Vorderansicht der selben Vorrichtung,

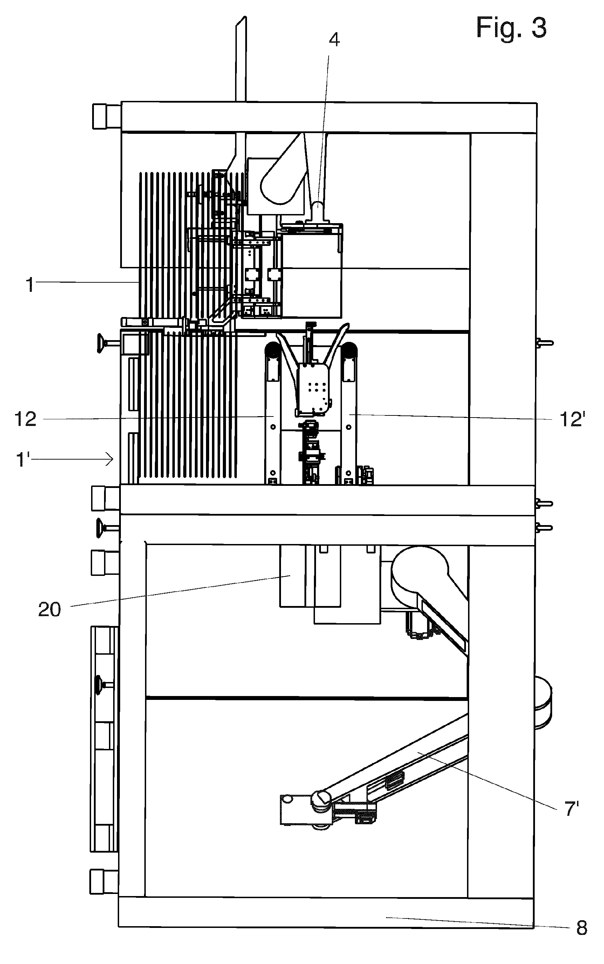

- Fig.3: eine Vorderansicht einer weiteren Vorrichtung mit einer neben einem Faltschachtelaufrichter angeordneten Stapelstation bzw. Palettierer und

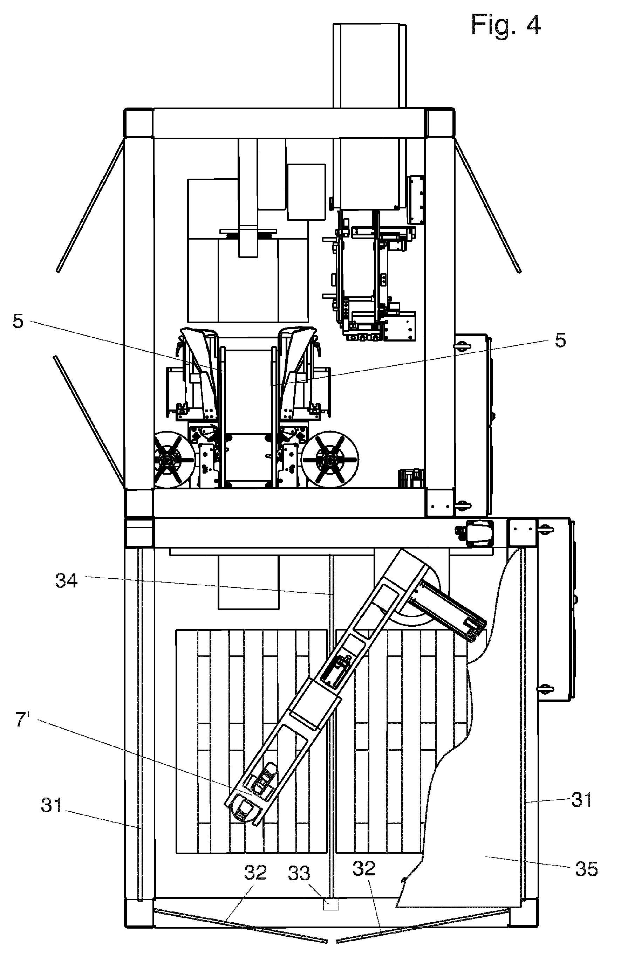

- Fig.4: eine Draufsicht derselben Vorrichtung

Mit 1 bzw. 1' ist in den Figuren ein Vorratsstapel von übereinander liegenden Kartonzuschnitten 2 bezeichnet. Der Vorratsstapel 1' ist unmittelbar neben einer ersten Aufrichtestation 3 platziert und wird automatisch oder manuell in diese bewegt, sobald der dortige Vorratsstapel 1 mit Kartonzuschnitten 2 aufgebraucht ist.

Die Kartonzuschnitte 2 werden in dieser Aufrichtestation 3 von einem darüber angeordneten Saugheber 4 erfasst und vom Vorratsstapel abgehoben. Darauf fährt eine seitlich angeordnete Schienenanordnung 5 unter diesen Kartonzuschnitt 2. Durch ein Zusammenwirken von Saugheber 4 und Schienenanordnung 5 wird der Kartonzuschnitt 2 zu einer offenen Hülse aufgerichtet und danach befüllt, wobei das zu verpackende Produkt seitlich in die offene Hülse eingeschoben wird.

Denkbar ist es aber auch, daß jeweils von einem Stapel der unterste Kartonzuschnitt 2 abgezogen und dieser dann aufgerichtet wird. Zudem ist es denkbar, daß anstatt der Schienenanordnung 5 eine beliebige andere Stützanordnung vorgesehen ist. Denkbar ist hier beispielsweise auch eine Transportbandanordnung. Bei entsprechender Ausgestaltung des Saughebers 4 kann auch völlig auf die Stützanordnung verzichtet werden. Zudem kann das zu verpackende Produkt auch vertikal in die offene Hülse eingeschoben werden. In diesem Zusammenhang ist es denkbar, daß die Hülse bereits vor dem Einschieben des zu verpackenden Produktes einseitig verschlossen wird.

Diese befüllte Hülse wird dann über ein Transportober- und unterband 12 bzw. 12' einer Verschlussstation 6 zugeführt, die unmittelbar neben der ersten Aufrichtestation angeordnet ist. Aufgrund des geringen Abstandes zwischen den beiden Stationen 3 und 6 ist es auch möglich, dass der Saugheber 4 den Weitertransport der Hülse übernimmt. In dieser zweiten Station 6 wird der Kartonzuschnitt 2 fertig aufgerichtet und anschließend verschlossen.

Das Verschließen kann durch einen Klebstoffauftrag oder durch Klebebänder, die vorzugsweise in Rollenform vorliegen, erfolgen.

Die aus dem Kartonzuschnitt 2 fertig aufgerichtete, befüllte und verschlossene Faltschachtel 20 wird dann aus der zweiten Station 6 ausgestoßen und kann von einem Greifer 7 bzw. 7'erfasst werden, der seitlich an einer als Palettierer ausgebildeten Ablagestation 8 - in mehreren Richtungen beweglich - gelagert ist.

In dieser Ablagestation 8 sind im dargestellten Ausführungsbeispiel zwei Paletten 9 und 10 vorgesehen, auf welche der Greifer 7 bzw. 7' die Verpackungen 20 ausgerichtet ablegt und stapelt. Die fertigen Stapel können dann seitlich aus der Ablagestation 8 entnommen werden. Hierzu sind Palettenein- bzw. ausläufe 11, 11 'vorgesehen.

Es ist aber auch denkbar, daß nur eine Palette vorgesehen ist, die mit einem Greifer 7 bedient wird. Dabei kann eine Dreh- und Hubeinrichtung für die Verpackungen vorgesehen sein, so daß die fertigen Verpackungen beliebig auf den Paletten ausgerichtet werden können. Durch die Hubeinrichtung kann eine mehr vertikale Bauweise vorgesehen werden, die nochmals Standfläche spart. Das gesamte Handling der Faltschachtel kann dann oberhalb der Palette(n) erfolgen.

Ebenso können auch der Saugheber 4 als auch die Verschlußstation mit Greifarmen ausgerüstet sein, so daß auf herkömmliche Transportbänder verzichtet werden kann. Die Faltschachteln lassen sich durch Greifarme, die in der Regel als Roboterarme ausgebildet sind, äußerst flexibel handhaben. Die Greifer 7 bzw. 7' können dabei seitlich oder oberhalb der Paletten angeordnet sein.

Für die gesamte Vorrichtung kann eine Sicherheitseinrichtung vorgesehen sein, die ein versehentliches Hineingreifen oder Hineingehen in den Arbeitsbereich der Vorrichtung verhindert bzw. die den Arbeitsbereich beim Austausch von Vorratsstapeln und/oder Paletten oder dergleichen in der Ablagestation beschränkt, wodurch die Verletzungsgefahr für den Bediener auch bei Unachtsamkeit oder gar Vorsatz reduziert bzw. ausgeschlossen wird.

Hierzu ist die Ablagestation 8 an zwei Seiten mit Seitenwänden 31 versehen, die ein Hineintreten oder Hineingreifen unmöglich machen. Beim Palettenein- bzw. -auslauf 11 bzw. 11' ist jeweils eine Türe 32 vorgesehen. Die Türe 32 ist mit einem Sicherheitsschalter 33 versehen, so daß beim Öffnen der Türe der Greifarm 7 bzw. 7' nicht mehr auf diese Palette zugreifen kann. Eine solche Steuerung ist in der Anlagensteuerung vorgesehen bzw. einprogrammiert. Zusätzlich ist zwischen den beiden Paletten eine Zwischenwand 34 vorgesehen, damit ein Bediener nicht von der gerade stillgesetzten Palette in den anderen Palettenraum hineingreifen kann.

Eine noch größere Sicherheit, die auch gegen vorsätzliches Fehlverhalten wirkt, wird dann geboten, wenn der jeweils gerade zugängliche Palettenraum durch eine Abdeckplatte 35 auch nach oben abgeschottet wird. Bei einem solchen fast hermetisch verschlossenen Raum ist es unmöglich, daß ein Bediener durch Unachtsamkeit oder auch Vorsatz verletzt wird.

Um Vorsatz durch zwei Personen zu verhindern, kann auch noch eine Überwachung des Palettenraumes erfolgen, so daß die Türe 32 nur geschlossen werden kann, wenn sich keine Person im Palettenraum befindet.

Der vorgenannte Aufbau ist nicht nur, wie in den Ausführungsbeispielen bei zwei Paletten, sondern auch bei einer oder mehr Paletten einsetzbar.

## Patentansprüche

1. Vorrichtung zum Palettieren von Verpackungen, insbesondere zum Palettieren von aufgerichteten Faltschachteln, **dadurch gekennzeichnet, dass** ein oder mehrere in mehreren Richtungen bewegliche Greifer (7, 7') vorgesehen sind, welche die fertigen Verpackungen (20) zu greifen vermögen und ausgerichtet auf wenigstens eine, vorzugsweise wenigstens zwei parallel neben einander angeordneten Paletten (8, 10) oder dergleichen zu stapeln vermögen.

2. Vorrichtung nach Anspruch 1, **dadurch gekennzeichnet, daß** die Greifer mit einem Saugheber ausgerüstet sind, welcher die Verpackungen (20) anzuheben vermag.

3. Vorrichtung nach Anspruch 1 oder 2, **dadurch gekennzeichnet, daß** die Greifer als Roboterarme ausgebildet sind.

4. Vorrichtung nach Anspruch 1, 2 oder 3, **dadurch gekennzeichnet, daß** eine Hub- und/oder Drehstation zur Ausrichtung, Drehung und Übergabe der fertigen Verpackungen vorgesehen ist, wobei diese Station durch einen Greifer bzw. Roboterarm realisiert sein kann.

5. Vorrichtung nach Anspruch 4, **dadurch gekennzeichnet, daß** die Hub- und/oder Drehstation mit der Palettierstation zusammengefasst ist.

6. Vorrichtung nach einem der vorhergehenden Ansprüche, **dadurch gekennzeichnet, dass** die Greifer bzw. Roboter seitlich, oberhalb oder unterhalb der Stationen (3, 8) angeordnet sind.

7. Vorrichtung nach einem der vorhergehenden Ansprüche, **dadurch gekennzeichnet, daß** eine Sicherheitseinrichtung vorgesehen ist, die ein versehentliches Hineingreifen oder Hineingehen in den Arbeitsbereich der Vorrichtung verhindert bzw. die den Arbeitsbereich beim Austausch von Vorratsstapeln und/oder Paletten oder dergleichen in der Ablagestation beschränkt.

8. Vorrichtung nach Anspruch 7, **dadurch gekennzeichnet, daß** für jede Palette ein durch Seitenwände abgegrenzter Raum geschaffen wird, in dem diese von den Greifern bzw. Robotern beladen wird und daß jeder der beiden Räume für einen Bediener zugänglich ist.

9. Vorrichtung nach Anspruch 7 oder 8, **dadurch gekennzeichnet, daß** jede Palette durch Steuerung der Greifarme bzw. Roboter von der Palettierung ausgeschlossen werden kann.

10. Vorrichtung nach Anspruch 7, 8 oder 9, **dadurch gekennzeichnet, daß** eine Abdeckvorrichtung zur Abgrenzung der gerade nicht genutzten Palette vorgesehen ist.

11. Vorrichtung nach einem der Ansprüche 7 bis 10, **dadurch gekennzeichnet, daß** eine Sicherheitseinrichtung gegen Hineingreifen in den Bereich der gerade genutzten Palette vorgesehen ist.

12. Vorrichtung nach einem der Ansprüche 7 bis 11, **dadurch gekennzeichnet, daß** eine Sicherheitseinrichtung vorgesehen ist, welche die gerade nicht genutzte Palette von der Nutzung ausschließt, wenn ein Bediener auf diese zugreift.
